(19) Europäisches Patentamt

European Patent Office

Office européen des brevets

(11) EP 1 451 835 B1

(12) EUROPEAN PATENT SPECIFICATION

(45) Date of publication and mention
of the grant of the patent:
**15.03.2006 Bulletin 2006/11**

(51) Int Cl.:
***H01G 7/02*** (2006.01)

(21) Application number: **02759321.9**

(86) International application number:
**PCT/US2002/025422**

(22) Date of filing: **12.08.2002**

(87) International publication number:
**WO 2003/023796 (20.03.2003 Gazette 2003/12)**

(54) **METHOD OF MAKING AN ELECTRET**

VERFAHREN ZUM HERSTELLEN EINES ELEKTRETS

PROCEDE DE FABRICATION D'UN ELECTRET

(84) Designated Contracting States:
**AT BE BG CH CY CZ DE DK EE ES FI FR GB GR IE IT LI LU MC NL PT SE SK TR**

(30) Priority: **07.09.2001 US 949387**

(43) Date of publication of application:
**01.09.2004 Bulletin 2004/36**

(73) Proprietor: **3M Innovative Properties Company**
**St. Paul, MN 55133-3427 (US)**

(72) Inventors:
• **CHOU, Shih-Hung**
**Saint Paul, MN 55133-3427 (US)**
• **WU, Tien, Tsung**
**Saint Paul, MN 55133-3427 (US)**
• **MEI, Betty, Z.**
**Saint Paul, MN 55133-3427 (US)**
• **SCHABERG, Mark, S.**
**Saint Paul, MN 55133-3427 (US)**
• **BUCCELLATO, Gina, M.**
**Saint Paul, MN 55133-3427 (US)**
• **ELSBERND, Cheryl, L., S.**
**Saint Paul, MN 55133-3427 (US)**
• **GUERRA, Miguel, A.**
**Saint Paul, MN 55133-3427 (US)**

(74) Representative: **Vossius & Partner**
**Siebertstrasse 4**
**81675 München (DE)**

(56) References cited:
EP-A- 1 126 072        WO-A-01/07144
US-A- 4 588 537        US-A- 4 650 506
US-A- 4 734 227        US-A- 5 906 743
US-A- 6 030 906        US-A- 6 110 588
US-A- 6 123 752        US-B1- 6 237 595

**EP 1 451 835 B1**

**Description**

The invention relates to a method of making an electret.

Electrets are dielectric articles that exhibit a lasting charge, that is, a charge that is at least quasi-permanent. The charged nature of the electret enhances the electret's ability to attract and retain particles such as dust, dirt, and fibers that are present in the air. Electrets have been found to be useful in a variety of applications including air, furnace and respiratory filters, face masks, and electro-acoustic devices, such as microphones, headphones, and electrostatic recorders.

US-A-6,123,752 refers to a high efficiency filtration medium comprised of a nonwoven filter web of electret charged fibers of a nonconductive thermoplastic resin having a resistivity greater than $10^{14}$ ohm-cm. The nonwoven filter web has a basis weight (BW) of less than 60 grams/m$^2$, an effective fiber diameter (EFD) of less than 5 $\mu$m and a penetration (PEN) of less than 0.03%, wherein the ratio BW/(EFD.PEN) is greater than 200.

US-A-6,110,588 discloses highly oriented, melt processed polymeric microfibers having an effective average diameter of less than 20 $\mu$m, which are substantially rectangular in cross section, having a transverse aspect ratio (width to thickness) of from 1.5:1 to 20:1.

Over the years, various methods of making and improving the performance of nonwoven fibrous electrets have been developed. These methods include, for example, bombarding fibers with electrically charged particles as the fibers issue from a die orifice, corona charging a nonwoven fibrous web and hydrocharging a nonwoven fibrous web.

Another method of improving the performance of a nonwoven fibrous electret includes adding a charge additive to a polymer melt, extruding the polymer blend in the form of a microfiber web, and then charging the web. The charge additive can increase the level of charge on the electret and improve the filtering performance of the electret. Such charge additives, however, must be melt processable, i.e., suffer substantially no degradation under the melt processing conditions used to form microfibers of the nonwoven web. This criterion limits the number and type of chemicals that may be used as charge additives in such processes.

The invention features a method of making an electret that includes contacting a porous substrate that includes polymer with a composition that includes solvent capable of swelling the polymer, evaporating the solvent from the substrate, and contacting the substrate with water in a manner sufficient to impart an electret charge to the substrate. In one embodiment, contacting with water includes impinging jets of water or a stream of water droplets on the substrate at a pressure and for a period sufficient to impart an electret charge to the substrate, and the method further includes drying the substrate.

In some embodiments, the composition further includes a second solvent. In some embodiments, the solvent is selected from the group consisting of alcohols, alkyl halides, amines, amides, aromatics, esters, ethers, alkanes, alkenes, alkynes, ketones, organosilicones, alkyl pyrrolidones, paraffins, and combinations thereof In another embodiment, the solvent is selected from the group consisting of toluene, heptane, hexane, hexyl alcohol, xylene, trifluoroethanol, 2-butanone, and combinations thereof.

In one embodiment, the substrate is contacted with the composition at a pressure greater than atmospheric pressure.

In some embodiments, the composition further includes charge additive. In one, embodiment, the charge additive is selected from the group consisting of fluorinated oxazolidinones, fluorinated piperazines, perfluorinated alkanes, and combinations thereof. In another embodiment, the charge additive includes poly[[6-(1,1,3,3,-tetramethylbutyl) amino]-s-triazine-2,4-diyl][[(2,2,6,b-tetramethyl-4-piperidyl)imino] hexamethylene [(2,2,6,6-tetramethyl-4-piperidyl)imino]].

In one embodiment, contacting the substrate with the composition includes spraying. In other embodiments, contacting the substrate with the composition includes soaking.

In another embodiment, the solvent exhibits a temperature greater than 30 °C during contacting of the substrate with the composition. In some embodiments, the solvent exhibits a temperature greater than 60 °C during contacting of the substrate with the composition.

In other embodiments, the electret exhibits a Quality Factor of at least 1/mm $H_2O$. In some embodiments, the electret exhibits a Quality Factor of at least 1.5/mm $H_2O$. In another embodiment, the electret exhibits a Quality Factor of at least 2/mm $H_2O$.

In some embodiments, the substrate includes a nonwoven fibrous web. In one embodiment, the nonwoven fibrous web includes fibers selected from the group consisting of polycarbonate, polyolefin, polyester, halogenated polyvinyl, polystyrene, and combinations thereof. In another embodiment, the nonwoven fibrous web includes fibers selected from the group consisting of polypropylene, poly-(4-methyl-1-pentene), and combinations thereof.

The electret includes a porous substrate that includes polymer and no greater than 0.75 % by weight extractable hydrocarbon based on the weight of polymer in the substrate. In some embodiments, the electret includes charge additive. In one embodiment, the polymer includes no greater than 0.5 % by weight extractable hydrocarbon. In another embodiment, the polymer includes no greater than 0.2 % by weight extractable hydrocarbon.

In some embodiments, the electret is a nonwoven fibrous web that includes meltblown microfibers. In one embodiment, the melt-blown microfibers have an effective fiber diameter of 1 $\mu$m to 50 $\mu$m. In another embodiment, the melt-blown microfibers include polyolefin, for example, polypropylene. In one embodiment, the nonwoven web has a basis weight of 10 g/m$^2$ to 500 g/m$^2$.

An electret is described that includes polypropylene fibers and charge additive that exhibits a decomposition temperature no greater than 235 °C. In one embodiment, the charge additive exhibits a decomposition temperature no greater than 200°C.

A respiration is disclosed that includes an above-described electret.

A filter that includes an above-described electret is also described.

A face mask is disclosed that includes an above-described electret.

The invention features a method of preparing an electret in which the electret properties of a polymer substrate are enhanced in the absence of a charge-enhancing additive. The invention also features a method that enables a wide variety of charge-enhancing additives to be incorporated into the polymer substrate of the electret including charge-enhancing additives having a decomposition temperature less than the extrusion temperature of the polymer of the substrate.

The electrets produced by these methods exhibit good filter properties including oily mist resistance, charge stability over time and high quality factors. The electrets also exhibit good charge stability and filtering performance after aging at elevated temperature over extended periods of time. The methods can also produce electrets having relatively low levels of extractable hydrocarbon.

In reference to the invention, these terms have the meanings set forth below: The term "electret" means a dielectric material exhibiting a quasi-permanent electrical charge. The term "quasi-permanent" means that the time constants characteristic for the decay of the charge are much longer than the time period over which the electret is used.

Other features and advantages will be apparent from the following description of the preferred embodiments and from the claims.

Fig. 1 is a Thermally Stimulated Current Spectroscopic Scan of Controls 1, 3, and 4 and Example 5.

Fig. 2 is a plot of the Quality Factor versus DOP Challenge in milligrams (mg) for Examples 34-42 and Control 8.

The method of preparing an electret includes contacting a porous substrate comprising polymer with a composition comprising solvent capable of swelling said polymer, evaporating said solvent from said substrate; and contacting said substrate with water in a manner sufficient to impart an electret charge to said substrate.

The composition for treating the polymer substrate includes a solvent capable of swelling the polymer of the substrate and, optionally, a charge additive. The solvent is selected to be sufficiently soluble in the polymer to swell the polymer, solubilize low molecular weight components of the polymer, and allow the solvent and charge additive (when present) to coat, penetrate, or a combination thereof, the polymer and/or the polymer substrate. The degree of solubility of the solvent in the polymer is such that the polymer maintains its form, that is, does not dissolve substantially into the solvent Solvent solubility parameters and Hansen parameter solubility values can be used to determine whether and to what degree a solvent will swell a predetermined polymer. A useful source of solubility parameter and Hansen parameter information is Barton, Allan F.M., CRC Handbook of Solubility Parameters and Other Cohesion Parameters, Second Edition: CRC Press; Boca Raton, 1991. Solubility parameters and Hansen parameters can be used by the skilled artisan to select appropriate solvents for the polymer substrate. For a predetermined polymer, for example, the solvent (or solvent mixture) is selected from the group of solvents whose solubility parameter or Hansen parameter is sufficiently near the solubility parameter or Hansen parameter of the polymer such that the solvent will swell the predetermined polymer. For substrates that include polypropylene, for example, preferred solvents include, for example, toluene, heptane, hexane, hexyl alcohol, xylene, 2-butanone, and combinations thereof.

For solvent compositions that include charge additive, the solvent (alone or in combination with other solvents) is further selected to be capable of dissolving or being miscible with the predetermined charge additive.

Examples of useful solvents include alcohols (for example, methanol, ethanol, isopropanol and hexyl alcohol); alkyl halides (for example, chlorotrifluoromethane, trichlorofluoromethane, perfluoropropane and chlorodifluoromethane); sulfur hexafluoride; dimethyl sulfoxide; amines (for example, N-methylpyrrolidine); amides (for example, N,N-dimethylacetamide); aromatics (for example, benzene, toluene and xylenes); esters (for example, ethyl acetate, dibasic esters and lactate esters); ethers (for example, diethyl ether, tetrahydrofuran and glycol ethers); alkanes (for example, ethane, propane, n-pentane, hexanes, heptane, cylcohexane, methylcyclohexane); alkenes (for example, ethylene and propylene); natural hydrocarbons (for example, isoprene, terpenes, d-limonene, pine oil and terpentine); alkynes; ketones (for example, acetone and methyl ethyl ketone); organosilicones; alkyl pyrrolidones (for example, N-methyl pyrrolidone); paraffins (for example, isoparaffin); petroleum based solvents and solvent mixtures; chloroform, carbon tetrachloride, perfluorocarbons, perfluoropolyethers, hydrofluorocarbons, hydrofluoroethers, hydrochlorofluorocarbons, hydrochlorofluoro ethers, chlorofluorocarbons, hydrochlorocarbons, hydrobromocarbons, fluorinated compounds containing at least one aromatic moiety and perfluoroiodides, and mixtures thereof.

One example of a commercially available fluorinated solvent is available under the trade designation FLUORAD FC77 from 3M Company (St. Paul, Minnesota).

The charge additive is capable of altering the charged nature of the electret by improving the ability of a polymer substrate treated therewith to maintain a charge after being hydrocharged (that is, increasing the charge stability of a treated electret relative to an untreated electret), increasing the amount of charge exhibited by a treated substrate after hydrocharging relative to the untreated substrate, and combinations thereof. The charge additive is soluble in the solvent and preferably remains with the polymer substrate when the solvent is removed. The method enables the use of charge additives exhibiting a decomposition temperature (that is, the temperature at which the charge additive exhibits a 5 % loss in weight in air as determined by thermogravimetric analysis with a 10 °C/minute sweep rate) that is less than the extrusion temperature of the polymer substrate including, for example, charge additives having a decomposition temperature less than 235 °C, and charge additives having a decomposition temperature less than 200 °C.

Suitable charge additives include fluorochemical additives including, for example, fluorinated oxazolidinones, fluorinated piperazines, perfluorinated alkanes (preferably perfluorinated alkanes having from 10 to 50 carbon atoms, more preferably from 15 to 30 carbon atoms) and fluorochemical additives disclosed in U.S. Patent No. 5,411,576 (Jones et al.). One useful charge additive is a perfluorinated polypropylene having the chemical formula $C_3F_7$-$[CF_2CF(CF_3)]$n-$C_3F_7$ where n =10-14 and an average molecular weight of from 1800 to 2400.

Useful fluorinated oxazolidinones include, for example, Additives A and D described in U.S. Patent No. 5,411,576 (Jones et al.), and those fluorinated oxazolidinones disclosed in U.S. Patent Nos. 5,025,052 (Crater et al.) and 5,099,026 (Crater et al.).

Examples of other useful charge stabilizing additives include fatty acid metal salts, hindered amines, nitrogen-containing hindered phenols, metal-containing hindered phenols, thermally stable organic triazine compounds and oligomers containing at least one nitrogen in addition to the nitrogen in the triazine groups as described in U.S. Patent No. 5,976,208 (Rousseau et al.). Other suitable charge stabilizing additives include Color Index Solvent Blue 124 in its highly crystalline sulfate state and trichlorotriphenylmethyl tetrachloroaluminate, which are described in U.S. Patent No. 5,871,845 (Dahringer et al.), as well as those charge additives described, for example, in U.S. Patent Nos. 4,652,282 (Ohmori et al.), 5,057,710 (Nishiura et al.) and 5,976,208 (Rousseau et al.).

One useful commercially available charge additive is poly[[6-(1,1,3,3,-tetramethylbutyl) amino]-s-triazine-2,4-diyl][[(2,2,6,6-tetramethyl-4-piperidyl)imino] hexamethylene [(2,2,6,6-tetramethyl-4-piperidyl)imino]], which is available under the trade designation CHIMASSORB 944 from Ciba Spezialitatenchemi AG (Basil, Switzerland).

The actual amount of charge additive present in the composition can vary depending upon the desired properties of the resulting electret. The charge additive may be present in the composition in an amount, for example, sufficient to provide an electret having from about 0.1 % by weight to about 10 % by weight charge additive.

Another useful composition for treating the polymer substrate includes compressed fluid and charge additive. The compressed fluid has sufficient solubility to swell the polymer matrix. The degree of solubility of the compressed fluid in the polymer is preferably such that the polymer maintains its form, that is, does not dissolve substantially into the compressed fluid. Preferably the compressed fluid is capable of solubilizing the charge additive.

The compressed fluid may be present in the supercritical state or the liquid state. The physical state of compressed fluid depends on temperature and pressure, which can be altered as necessary to achieve the desired state. Carbon dioxide, for example, may be in a liquid or gaseous state at temperatures below about 31 °C and pressures below about 1070 psi (7.4 Mpa) and in the supercritical state at temperatures above about 31 °C and pressures above about 1070 psi (7.4 MPa) .

A supercritical fluid is a fluid that is maintained at or above its critical temperature (Tc) and critical pressure (Pc) (that is, above its critical point (Cp)), to place the fluid in a supercritical fluid state. Many commonly used supercritical solvents are gases at ambient temperature (about 22 °C) and atmospheric pressure (approximately 145 psi; 1MPa). When maintained at or above Cp, the supercritical fluid displays properties of both a gas and a liquid. Such a supercritical fluid has the solvent characteristics of a liquid and the low surface tension of a gas. As in the case of a gas, the supercritical fluid can readily diffuse into a selected solute material, for example, a polymer.

A preferred compressed fluid is carbon dioxide. Examples of other suitable compressed fluids include nitrogen, nitrous oxide, ethane, propane, chlorotrifluoromethane, 1,1,1,2-tetrafluoroethane, 1,1,1,2,3,3,3-heptafluoropropane, ethylene, propylene, and combinations thereof.

The composition can also include a solvent capable of solubilizing, that is, dissolving or miscibilizing, the charge additive and, optionally, capable of swelling the polymeric substrate. Such a solvent is herein referred to as a "co-solvent " Examples of useful co-solvents include the solvents set forth above and trifluoroethanol. One useful commercially available fluorinated co-solvent is available under the trade designation FC-77 from 3M Company (St. Paul, Minnesota).

A variety of methods can be used to treat the polymer substrate with the composition including, for example, soaking (for example, impregnating and immersing), spraying, and combinations thereof. Treating the substrate with the composition includes contacting the substrate with the composition. Compressed fluids and other low boiling point solvents and co-solvents present in the composition may evaporate prior to contact with the substrate. The treating compositions can be heated to improve the solubility of the charge additive in the composition and the rate at which the solvent, supercritical fluid, charge additive or a combination thereof, diffuse into the polymer substrate. The treating composition is preferably heated to a temperature greater than room temperature, and can be heated to a temperatures greater than 30 °C and greater than 60 °C, prior to contacting the polymer substrate.

Methods for treating a polymer substrate with a composition that includes supercritical fluid preferably maintain the supercritical fluid at or above the supercritical temperature and supercritical pressure of the supercritical fluid. Supercritical carbon dioxide, for example, is preferably pressurized to from about 1000 psi (6.9 MPa) to about 4000 psi (27.6 MPa) (more preferably from about 1800 psi (12.4 MPa) to about 4000 psi (27.6 MPa)) at a temperature of from about 30 °C to about 90 °C (preferably from about 35 °C to about 85 °C).

One example of a useful compressed fluid soaking method includes placing the substrate in a chamber for which pressure and temperature can be controlled, introducing supercritical fluid into the chamber at a temperature greater than the critical temperature, under pressure greater than the critical pressure and for a period sufficient to allow the charge additive to penetrate the substrate and then releasing the pressure causing the supercritical fluid to evaporate. The chamber includes the charge additive and may include other components of the treating composition.

One example of a useful compressed fluid spray method includes positioning the substrate to receive a spray of the treating composition from a chamber pressurized with supercritical fluid. The treating composition exits the pressurized chamber at an outlet and contacts the substrate in the form of a spray. The pressure of the spray is maintained by the flow of pressurized supercritical fluid to the chamber.

Useful polymer substrates are nonconductive, that is, a polymeric material having a resistivity greater than $10^{14}$ ohm-cm, and include, for example, films such as porous films disclosed in U.S. Patent No. 4,539,256 (Shipman); nonwoven webs, see, for example, U.S. Patent No. 5,976,208 (Rousseau et al.); microstructures, for example, films that include layered structures having open passageways, see, for example, pending application U.S.S.N. 09/106,506, entitled, "Structured Surface Filtration Media, " (Insley et al.), filed June 18, 1998; foams and sponges. The method is particularly useful for making electrets from nonwoven polymeric fibrous webs that include fibers such as, for example, meltblown microfibers, staple fibers, fibrillated films, and combinations thereof.

One useful method of making meltblown microfibers is described in Wente, Van A., "Superfine Thermoplastic Fibers, " Industrial Eng. Chemistry, Vol. 48, pp. 1342-1346, and in Report No. 4364 of the Naval Research Laboratories, published May 25, 1954, entitled, "Manufacture of Super Fine Organic Fibers, " by Wente et al. Meltblown microfibers preferably have an effective fiber diameter of from about 1 to 50 micrometers ($\mu$m) as calculated according to the method set forth in Davies, C.N., "The Separation of Airborne Dust and Particles, " Institution of Mechanical Engineers, London, Proceedings 1B, 1952. For filtration purposes, the fibers preferably have an effective fiber diameter of from about 1 $\mu$m to 25 $\mu$m.

The presence of staple fibers may provide a more lofty, less dense web than a web constructed solely of meltblown microfibers. Some useful electrets include more than 70 % by weight staple fibers. Webs that contain staple fibers are disclosed, for example, in U.S. Patent No. 4,118,531 (Hauser).

Nonwoven polymeric fibrous electret webs used for filtration applications, particularly in respirators, preferably have a basis weight in the range of from about 10 to 500 g/m$^2$, more preferably from about 10 to 100 g/m$^2$.

Preferably the fibers of the nonwoven web are formed from polymers. The polymer used to form the fibers should be substantially free of materials such as antistatic agents that could increase the electrical conductivity or otherwise interfere with the ability of the fibers to accept and hold electrostatic charges.

Preferred substrate polymers are thermoplastic. Suitable thermoplastic polymers include, for example, nonconductive polymers that are capable of retaining a high quantity of trapped charge and capable of being formed into fibers, and fluoropolymers. Examples of useful thermoplastic polymers include polyolefins including, for example, polypropylene, polyethylene, poly-(4-methyl-1-pentene), blends or copolymers containing one or more of these polymers, and combinations thereof, halogenated vinyl polymers (for example, polyvinyl chloride), polychloroprene, polystyrene, polycarbonates, polyesters such as polyethylene terephthalate, and combinations thereof.

The polymer melt can also include fluorochemical additives prior to contact with the solvent. Fluorochemical additives can be blended with the polymer resin prior to forming an article, for example, fibers, as described in U.S. Patent Nos. 5,099,026 (Crater et al.), 5,025,052 (Crater et al.), and 5,411,576 (Jones et al.), and PCT Publication WO 97/07272 (Rousseau et al.).

Other additives can be blended with the polymer resin including, for example, pigment, UV stabilizers, antioxidants, and combinations thereof.

The polymer substrate can also include particulate matter as disclosed, for example, in U.S. Patent Nos. 3,971,373 (Braun), 4,100,324 (Anderson), and 4,429,001 (Kolpin et al.). Particulate matter is useful for removing noxious vapors from air.

Various methods can be used to evaporate the solvent, supercritical fluid or combination thereof from the treated substrate including, for example, air drying, oven drying, decreasing pressure, and combinations thereof.

The treated substrate is contacted with water in a manner sufficient to impart an electret charge to the polymer substrate, which is also referred to as "hydrocharging. " Hydrocharging includes impinging jets of water or a stream of water droplets on the substrate at a pressure sufficient to impart an electret charge to the polymer substrate. The substrate is then dried. Useful hydrocharging methods are described, for example, in U.S. Patent Nos. 5,968,635 (Rousseau et aL), 5,496,507 (Angadjivand et al.) and PCT Publication WO 97/07272 (Rousseau et al.).

The method preferably provides electrets having low levels of extractable hydrocarbon, preferably no greater than 0.75 % by weight extractable hydrocarbon, more preferably no greater than 0.5 % by weight, most preferably no greater than 0.2 % by weight extractable hydrocarbon based on the weight of polymer in the substrate.

The methods are particularly well suited for imparting electret properties to nonwovens and enhancing the filtering performance of nonwovens. One measure of filtering performance is obtained from the dioctyl phthalate ("DOP") initial penetration test ("the DOP test"). The DOP test also provides a relative measure of the charge state of the filter. The DOP test procedure involves forcing DOP aerosol across a sample at a predetermined face velocity, measuring the pressure drop across the sample (Pressure Drop measured in mm $H_2O$) with a differential manometer, and measuring the percent DOP penetration (DOPPen %). Preferably the DOPPen % of the charged sample is less than the DOPPen % of the uncharged sample. The Quality Factor (Q) (measured in 1/mm $H_2O$) can be calculated from these values according to the following formula:

$$\text{Quality Factor (Q) } [1/\text{mm } H_2O] = -\ln[\% \text{ Penetration}/100]/\text{Pressure Drop (mm } H_2O).$$

The higher the Quality Factor at a given flow rate, the better the filtering performance of the electret.

Electrets can be prepared having a wide range of Quality Factors including, for example, Quality Factors of at least about 0.25/mm $H_2O$, at least about 0.5/mm $H_2O$, preferably at least about 1/mm $H_2O$, more preferably at least about 1.5/mm $H_2O$, most preferably at least about 2/mm $H_2O$.

The electrets are suitable for use in a variety of applications including, for example, filtering, for example, air filters (for example, heating, ventilation, and air conditioning applications), fluid filters, and respiratory filters, for example, face masks and respirators (for example, prefilters, canisters and replaceable cartridges), electrostatic elements in electro-acoustic devices such as microphones, headphones and speakers, and in, for example, high voltage electrostatic generators and electrostatic recorders.

The invention will now be described by way of the following examples. All ratios and percentages are by weight unless otherwise indicated.

EXAMPLES

Test Procedures

Test procedures used in the examples include the following.

DOP Penetration and Pressure Drop Test for Determining Loading

The dioctyl phthalate (DOP) loading measurements are performed by monitoring the penetration of DOP aerosol through a sample during prolonged exposure to a controlled DOP aerosol. The measurements are made using an automated filter tester ("AFT") model 8130 (TSI Incorporated, St. Paul, Minnesota) adapted for DOP aerosol. DOP % Penetration is defined to be:

$$\text{DOP \% Penetration} = 100(\text{DOP Conc. Downstream}/\text{DOP Conc. Upstream}),$$

where the concentrations upstream and downstream are measured by light scattering and the DOP % penetration was calculated automatically by the 8130 AFT instrument. The DOP aerosol generated by the 8130 AFT instrument is nominally a monodisperse 0.3 micrometers mass median diameter having an upstream concentration of 85 mg/m$^3$ to 110 mg/m$^3$ as measured using a standard filter. The samples are tested with the aerosol ionizer turned off and at a flow rate through the sample of 42.5 liters per minute (L/min).

Samples are cut and mounted in a sample holder such that a 11.45 cm (4.5 inch) diameter portion of the sample is exposed to aerosol. The face velocity is 6.9 centimeters/second (cm/sec).

Each test is continued until the calculated load on the sample was 200 mg DOP. The DOP % Penetration and corresponding Pressure Drop data are transmitted to an attached computer where they are stored.

DOP Penetration and Pressure Drop Test For Determining Initial Quality Factor

The DOP penetration and Pressure Drop Test are performed by forcing an aerosol of dioctylphthalate (DOP) particles through an 11.45 cm (4.5 inch) diameter sample of nonwoven web at a flow rate of 32.5 L/minute for a period of 4 seconds rise time and 20 seconds for sampling. The DOP particles have a median diameter of 0.3 $\mu$m and are generated at a concentration of between 85 and about 110 mg/m$^3$, using a TSI CertiTest Model No. 8130 automated filter tester (TSI Incorporated, St. Paul, Minnesota) with four orifices and 207 kiloPascals (kPa) (30 psi) of clean air.

Quality Factor Calculation

The quality factor of the sample is calculated by the following formula:

$$\textbf{Quality Factor (Q) [1/mm H}_2\textbf{O] = -ln[\% Penetration/100]/Pressure Drop (mm H}_2\textbf{O).}$$

Method of Determining Extractable Hydrocarbon

Duplicate 9 cm x 15 cm samples are cut from a control web and a test web. The samples are weighed and the weight is recorded. Each sample is placed in a clean 40 ml glass vial, which is then filled to the top with hexane. A solvent control is prepared by placing the same volume of solvent in an empty vial. The vials are then sealed with Teflon lined screw cap tops and placed on a circular rotator at room temperature for one hour. After one hour, the solvent is transferred to a second clean glass vial ("the evaporation vial") and evaporated under a stream of nitrogen at room temperature. The vials containing the web are refilled with fresh solvent and rotated for an additional hour. At the end of the second extraction the solvent is transferred to the evaporation vials. When the liquid level is reduced to a few milliliters, the solvent is transferred from the evaporation vials, using two rinses of hexane to clean, tared, 8 ml vials. The vials are then dried until a constant weight is obtained.
The % residue is determined by dividing the residue weight by the sample weight and multiplying by 100. Values for duplicate samples are averaged.

Thermally Stimulated Discharge Current (TSDC)

TSDC studies are conducted using a Solomat TSC/RMA model 91000 with a pivot electrode ("the TSDC apparatus") (TherMold Partners, L.P., Thermal Analysis Instruments of Stanford, Connecticut). Samples are cut and placed between electrodes in the Solomat TSC/RMA. A thermometer is disposed adjacent to, but not touching, the sample. The samples should be optically dense, for example, there should not be visible holes through the sample web. The samples should be large enough to completely cover the top contact electrode. Since the electrode is about 7 mm in diameter, the samples are cut larger than 7 mm in diameter. To ensure good electrical contact with the electrodes, the samples are compressed in thickness by a factor of about 10. Air is evacuated from the sample chamber and replaced with helium at a pressure of about 1100 millibar. Liquid nitrogen cooling is used.

TSDC Test Procedure

An article is poled at 100 °C for 1 minute in an applied electric field of 2.5 kilovolts per millimeter (kV/mm) in the TSDC apparatus. With the field on, the sample is cooled rapidly (at a maximum rate of the instrument) to -50 °C. The sample is held at - 50 °C for 5 minutes with the field off and then heated at 3 °C/min while the discharge current is measured. Charge densities can be calculated from each peak of the TSDC spectra by drawing a baseline between the minima on each side of a selected peak and integrating the area under the peak.

Sample Preparation

Method of Treating Webs with Solvent Composition

Solvent Spraying

Solvent composition was uniformly applied to both sides of an approximately 10-13 g polypropylene web at a distance of 9 inches (23 cm) using a PREVAL sprayer (Precision Valve Corp., Yonkers, New York). The web was then air dried overnight at room temperature.

Method of Treating Webs with Supercritical Carbon Dioxide Composition

Soaking

A 50 mL stainless steel view cell equipped with sapphire windows, an inlet line from a carbon dioxide cylinder, an exit line with in-line needle valve to vent and an additional pressure handling system, was charged with an amount of charge enhancing additive and, where indicated, co-solvent A pre-weighed 6 inch x 6 inch (15cm x 15cm) web was folded in half, rolled into a tube, and placed in the 50 mL stainless steel view cell. The web was bent as necessary to get the web in the cell. The cell was sealed and pressurized with carbon dioxide to tank pressure (approximately 1700 psig; 11.7 MPa). The cell was then heated to 80 °C and held at 80 °C for 5 minutes. The cell was then quickly vented via a needle valve on the exit line and the web was removed immediately and weighed. The immediate weight and weight after stabilization at ambient conditions were measured. A slight weight loss was observed due to the diffusion of carbon dioxide out of the web.

Spraying

A 6 inch x 6 inch (15cm x 15cm) web was secured to a support, for example, cardboard, and placed in front of a 1/16 inch (1.6 mm) stainless steel exit line of a 10 ml stainless steel high pressure cell (equipped as described above for the 50 ml cell used in the soaking technique). Prior to spraying, the 10 mL cell contained additive(s) and co-solvent (s) (where present) maintained at approximately 40 °C, under an initial pressure of from 1200 psi (8.3 MPa) to 1500 psi (10.3 MPa) and, when heated to 40 °C, under pressure of from 1800 psi (12.4 MPa) to 2000 psi (13.8 MPa). The needle valve on the exit line was then carefully opened allowing the contents of the cell to "spray" onto the webs, which were passed in front of the spray stream to cover the entire web on both sides. The cell pressure was maintained during spray by providing back pressure from the carbon dioxide cylinder. In this batch spray process, the concentration of additive in the cell decreases as the spray process proceeds.

Hydrocharging Method

Hydrocharging was carried out by impinging jets of water or a stream of water droplets onto the web at a pressure sufficient to provide the web with filtration enhancing electret charge. Samples were passed twice through the jets of water, once on each side of the sample. The jets of water were generated by a pump assisted water sprayer operating at 120 psi (0.8 MPa) water pressure. Samples were placed on a mesh belt support and moved under the water jets at a belt speed of approximately 4 inches/second (10.2 cm/sec).
The sample was then passed over a vacuum to remove additional moisture and then allowed to air-dry overnight before proceeding with testing.

Preparation of Polypropylene Blown Microfiber Webs

The nonwoven webs were prepared generally as described by Van A. Wente, Industrial and Engineering Chemistry, Vol. 48, pp. 1342-1346 (1956).

Preparation of Type A Polypropylene Blown Microfiber Web

A polypropylene blown microfiber web was prepared by extruding Exxon PP3505 polypropylene resin (Exxon Chemical International, Houston, Texas) at an extruder temperature of 270 °C and a collector distance of 11.5 inches (2.8 cm). The basis weight of the blown microfiber web was 50 g/m$^2$ and the effective fiber diameter (EFD) was 10 $\mu$m.

Preparation of Type B Polypropylene Blown Microfiber Web.

A polypropylene blown microfiber web was prepared by extruding Exxon PP3505 polypropylene resin at an extruder temperature of 280 °C and a collector distance of 14 inches (35.6 cm). The basis weight of the blown microfiber web was 62 g/m$^2$ and the effective fiber diameter (EFD) was 8 $\mu$m.

Preparation of Perfluorinated Polyopropylene ($C_3F_7$-[$CF_2CF_3(CF_3)$]n-$C_3F_7$, where n =10-14. having an average molecular weight of from 1800 to 2400).

A 200 g sample of isotactic low molecular weight polypropylene powder (ATOFINA Petrochemicals Inc., Deer Park, Texas) was placed in Fluorinert FC77 fluorinated liquid and fluorinated with fluorine as described in U.S. Patent No. 5,488,142 (Fall et al.). The reaction product was filtered to remove insoluble solids and stripped of solvent to give 260 g solids for a 36 % yield. The filtrate was further purified using high vacuum distillation, which removed 22 % lower molecular weight oligomers to give a hard glassy solid having the chemical formula $C_3F_7$-$[CF_2CF(CF_3)]$n-$C_3F_7$, where n = 10-14, a glass transition of 6 °C and a molecular weight of 1800-2400 (MALDI/TOF) as determined by a MA Mode Voyager DE-STR matrix assisted laser desorption ionization time of flight mass spectrometer (Applied Biosystems, Boston, Massachusetts).

Control 1

A Type A blown polypropylene microfiber web was hydrocharged and dried.

Control 2

A blown microfiber web was prepared according to the method of preparing Type A blown polypropylene microfiber web with the exception that the melt used to form the fibers of the web included Exxon PP3505 polypropylene resin and 0.8 % by weight Chimassorb 944 melt additive. The web was hydrocharged and dried.

Examples 1-8

The web of Example 1 was prepared by placing approximately 28 g of the Type A blown polypropylene microfiber web in a one liter insulated container containing 969 ml of a solvent mixture consisting of 75 % by weight heptane and 25 % by weight toluene. The web was folded back and forth upon itself (that is, festooned) prior to insertion into the one liter container to expose the web to the solvent composition. The web was soaked for 10 minutes at room temperature, rinsed with 300 ml heptane, squeezed to remove the remaining solvent and then air dried overnight. The web was then charged according to the above-described hydrocharging method and air dried overnight.

The webs of Examples 2-8 were prepared as described above in Example 1, with the following exceptions: where indicated in Table 1, the solvent mixture further included Chimassorb 944 poly[[6-(1,1,3,3,-tetramethylbutyl) amino] -s-triazine-2,4-diyl][[(2,2,6,6-tetramethyl-4-piperidyl)imino] hexamethylene [(2,2,6,6-tetramethyl-4-piperidyl)imino]] (Ciba Spezialitatenchemi AG, Basil, Switzerland) in the amounts indicated in Table 1, and the soak time varied as indicated in Table 1.

The % Penetration and Quality Factor for each web was determined using a DOP challenge at 32.5 L/min. The results are set forth in Table 1.

Table 1

| Example | Chimassorb 944 (% by weight) | Soak Time (min) | % Penetration | Quality Factor |
|---------|------------------------------|-----------------|---------------|----------------|
| Control 1 | 0 | 0 | 37 | 0.87 |
| Control 2 | 0.8 % as a melt additive | 0 | 2.5 | 2.60 |
| 1 | 0 | 10 | 27 | 1.16 |
| 2 | 0 | 240 | 20 | 1.44 |
| 3 | 0.02 | 10 | 8.4 | 1.98 |
| 4 | 0.02 | 240 | 9.9 | 2.04 |
| 5 | 0.2 | 10 | 7.2 | 1.98 |
| 6 | 0.2 | 240 | 7.4 | 2.39 |
| 7 | 2 | 10 | 10 | 1.83 |
| 8 | 2 | 240 | 11 | 1.89 |

Control 3

The web of Control 3 consisted of Type A polypropylene blown microfiber web.

Control 4

A web was prepared according to the method of Example 5 with the exception that the blown polypropylene microfiber web was not hydrocharged.

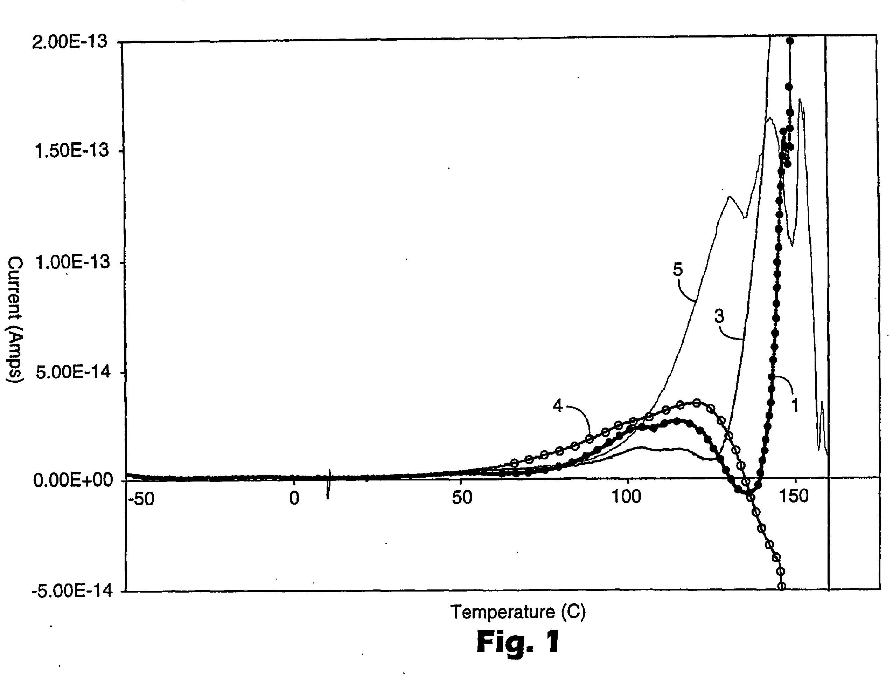

Controls 1, 3, 4, and Example 5 were measured by Thermally Stimulated Current Spectroscopy to determine the level of trapped charge. TSC curves for each of the samples are set forth in Fig. 1, where 1, 3, 4, and 5 correspond to Controls 1, 3, 4, and Example 5, respectively.

Examples 9-13

Type A polypropylene blown microfiber webs were treated according to Example 1 with the exception that the solvent composition was heated to 45 °C for 15 minutes prior to being introduced to the insulated container and the amount of Chimassorb 944 present in the composition was varied as indicated in Table 2.

The webs were soaked for 10 minutes at 40 °C, rinsed, dried, and hydrocharged as described in Example 1.

The % Penetration and Quality Factor were measured and the results are reported in Table 2.

Table 2

| Example | Chimassorb 944 (% by weight) | % Penetration | Quality Factor |
|---------|------------------------------|---------------|----------------|
| 9 | 0 | 24 | 1.43 |
| 10 | 0.07 | 15 | 1.73 |
| 11 | 0.2 | 10 | 2.18 |
| 12 | 0.5 | 15 | 2.07 |
| 13 | 1 | 13 | 1.89 |

Examples 14-17

Type A polypropylene blown microfiber webs were prepared as described above in Example 1 with the exception that the solvent composition was heated to 45 °C for 15 minutes prior to being introduced to the insulated container, the solvent composition varied as indicated in Table 3, and each solvent composition included 0.3 % by weight Chimassorb 944.

The polypropylene blown microfiber webs were soaked in the solvent composition for 10 minutes at 40 °C, rinsed, dried, charged, and tested as previously described. The results are set forth in Table 3.

Table 3

| Example | Solvent Composition (% by weight) | % Penetration | Quality Factor |
|---------|-----------------------------------|---------------|----------------|
| 14 | 75 heptane / 25 toluene | 13 | 1.82 |
| 15 | 98 heptane / 2 toluene | 12 | 1.81 |
| 16 | 95 hexyl alcohol / 5 toluene | 23 | 1.24 |
| 17 | 100 toluene | 17 | 1.53 |

Example 18

A TM07-27-98-02 meltblown polyethylene fibrous web (TransWeb, LLC, Vineland, New Jersey) having a basis weight of 86 g/m$^2$ and weighing 33.4 g, was soaked for 10 minutes at 40 °C in a solvent composition that consisted of 838 g toluene and 1.41 g Chimassorb 944. The web was rinsed in heptane, air dried, hydrocharged, and tested as previously described.

The web exhibited a Quality Factor of 0.61 and 38.4 % penetration.

Control 5

Control 5 consisted of a hydrocharged TM07-27-98-02 meltblown polyethylene fibrous web (TransWeb). The web exhibited a Quality Factor of 0.41 and 59 % penetration.

Examples 19-25

Type A polypropylene blown microfiber web, prepared as described in Example 1, was soaked for 10 minutes at 40 °C in the solvent compositions set forth in Table 4. The solvent composition of Example 25 also included 0.2 % by weight Chimassorb 944.

Control 6

Control 6 consisted of a hydrocharged Type A polypropylene blown microfiber web.

The % Penetration and Quality Factor of the webs of Examples 19-25 and Control 6 were measured immediately (that is, initial) and after aging for three days at 70 °C. The results are set forth in Table 4.

Table 4

| Example | Solvent Composition (% by weight) | Chimassorb 944 (% by weight) | Initial % Penetration | Initial Quality Factor | Aged % Penetration | Aged Quality Factor |
|---|---|---|---|---|---|---|
| Control 6 | None | 0 | 54 | 0.66 | 52 | 0.64 |
| 19 | toluene | 0 | 27 | 1.19 | 23 | 1.29 |
| 20 | 70 % toluene/ 30 % heptane | 0 | 27 | 1.15 | 25 | 1.30 |
| 21 | 50 % toluene/ 50 % heptane | 0 | 17 | 1.57 | 19 | 1.61 |
| 22 | 25 % toluene/ 75 % heptane | 0 | 24 | 1.29 | 22 | 1.44 |
| 23 | heptane | 0 | 21 | 1.45 | 22 | 1.47 |
| 24 | xylene | 0 | 29 | 1.35 | 29 | 1.20 |
|  |  |  |  |  |  |  |
| 25 | toluene | 0.2 | 11 | 2.09 | 13 | 2.08 |

Examples 26-29

Examples 26-29 were prepared as described for Examples 19, 21, 23, 25, and Control 6, respectively. Prior to charging, the samples were extracted according to the Method of Determining Extractable Hydrocarbon. The % residue was determined and the results are set forth in Table 5.

Table 5

| Example | % Residue |
|---|---|
| Control 6 | 0.90 |
| 26 | 0.26 |
| 27 | 0.26 |
| 28 | 0.17 |
| 29 | 0.66 |

Examples 30-33

Type A polypropylene blown microfiber webs were treated according to the above-described supercritical fluid soaking method in compositions that included supercritical carbon dioxide and, where indicated in Table 6, charge additive and co-solvent.

The web of Example 30 was annealed at 150 °C for 5 minutes after treatment in carbon dioxide.

Control 7

Control 7 consisted of a hydrocharged Type A polypropylene blown microfiber web.

The webs were tested to determine % Penetration and Quality Factor. The results are set forth in Table 6.

Table 6

| Example | Components of the Supercritical Fluid Composition | Anneal | % Penetration | Quality Factor |
|---------|---------------------------------------------------|--------|---------------|----------------|
| Control 7 | None | No | 42 | 0.78 |
| 30 | 0.060 % w/v Additive A Yes | | 30 | 0.99 |
| 31 | 0.280 % w/v PFPP | No | 12 | 1.79 |
| 32 | 0.030 % w/v Chimassorb 944; | No | 32 | 1.25 |
| | | | | |
| | 0.170 % v/v toluene | | | |
| 33 | 0.060 % w/v Chimassorb 944; 0.54 % v/v acetone | No | 38 | 0.96 |
| w/v = weight to volume<br>v/v = volume to volume<br>Additive A prepared as described in U.S. Patent No. 5,411,576 (Jones et al.)<br>PFPP = perfluorinated polypropylene ($C_3F_7$-[$CF_2CF(CF_3)$]n-$C_3F_7$, where n =10-14 | | | | |

Examples 34-42

Type B polypropylene blown microfiber web was used as the web of Examples 34-42.

The webs of Examples 34, 36, and 40-42 were treated according to the Supercritical Fluid Soaking Method.

The webs of Examples 35 and 37-39 were treated according to the Supercritical Fluid Spraying Method.

The compositions used to treat the webs included supercritical carbon dioxide and, where indicated in Table 7, charge additive and co-solvent. The webs were then dried, hydrocharged and dried again.

The webs of Examples 34, 35, 38, and 40-42 were annealed at 125 °C for the period specified in Table 7 prior to hydrocharging.

The webs were tested to determine % Penetration, initial Quality Factor (t=0) and Quality Factor after 200 mg DOP loading at a face velocity of 6.9 cm/sec. (t=200). The results are set forth in Table 7.

Control 8

Control 8 consisted of a hydrocharged Type A polypropylene blown microfiber web.

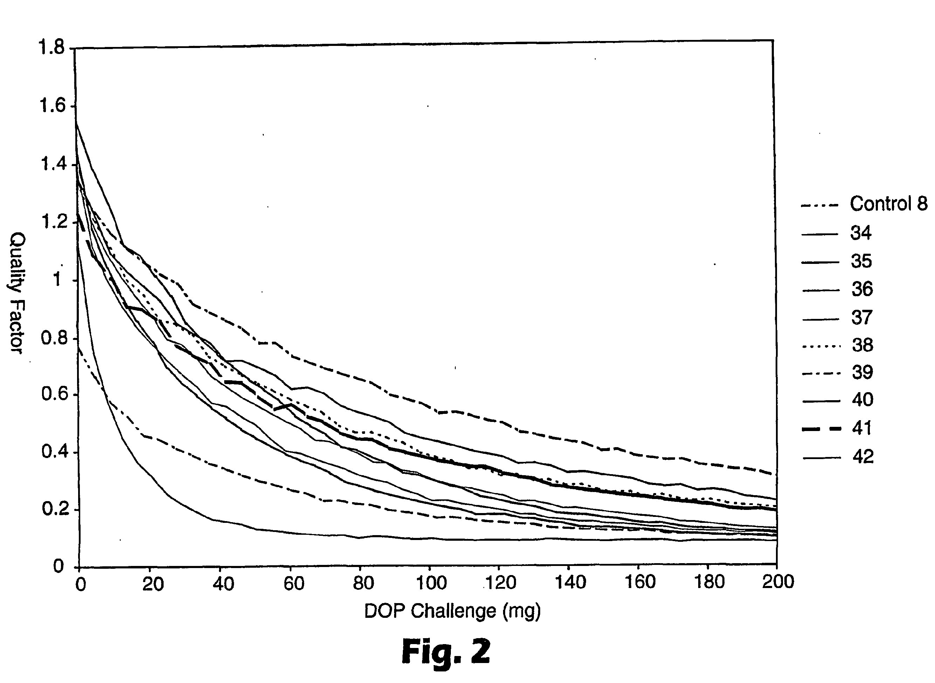

Fig. 2 illustrates the Quality Factor of each of webs of Examples 34-42 and Control 8 over a period of 200 minutes, where the lines indicated as 8 and 34-42 correspond to Control 8 and Examples 34-42, respectively.

Table 7

| Example | Components of the Supercritical Fluid Composition | Anneal | | % Penetration | Quality Factor at t=0 | Quality Factor at t=200 |
|---------|-----|-----|---------|---------------|-----------------------|-------------------------|
| | | °C | Minutes | | | |
| | | | | | | |
| Control 8 | None | -- | -- | 14.8 | 0.76 | 0.18 |
| 34 | 2 % v/v FC-77 | 125 | 10 | 4.8 | 1.38 | 0.10 |
| 35 | 10 % v/v FC-77 | 125 | 10 | 4.2 | 1.44 | 0.09 |
| 36 | 2 % v/v FC-77 | -- | -- | 8.2 | 1.13 | 0.08 |
| 37 | 10 % v/v FC-77 | -- | -- | 2.6 | 1.40 | 0.12 |

Table continued

| Example | Components of the Supercritical Fluid Composition | Anneal | | % Penetration | Quality Factor at t=0 | Quality Factor at t=200 |
|---|---|---|---|---|---|---|
| | | °C | Minutes | | | |
| 38 | 0.5 % w/v PFPP; 9.5 % v/v FC-77 | 125 | 5 | 4.7 | 1.33 | 0.20 |
| 39 | 0.5 % w/v PFPP; 9.5 % v/v FC-77 | -- | -- | 2.7 | 1.34 | 0.30 |
| 40 | 0.354 % w/v ; PFPP 6.7 % w/v FC-77 | 125 | 5 | 5.1 | 1.35 | 0.22 |
| 41 | 0.366 % w/v PFPP | 125 | 5 | 5.3 | 1.22 | 0.18 |
| 42 | 0.074 % w/v Additive D | 125 | 10 | 2.1 | 1.54 | 0.11 |
| FC-77 = Fluorinert FC77 fluorinated liquid (3M Company, St. Paul, Minnesota)Additive D prepared as described in U.S. Patent No. 5,411,576 (Jones et al.) -- = not applicable | | | | | | |

Examples 43-50

Type A polypropylene blown microfiber webs were treated according to the solvent spray method with a composition that included solvent and charge additive. The webs were then dried, hydrocharged and dried again. The webs of Examples 45, 47, and 48 were annealed at 100 °C for 5 minutes prior to hydrocharging.

Controls 9 and 10

Controls 9 and 10 consisted of hydrocharged blown polypropylene microfiber web. The web of Control 10 was annealed at 100 °C for 5 minutes prior to hydrocharging.

The Quality Factor (Q) for the webs of Examples 43-50 and Controls 9 and 10 was determined and is reported in Table 8.

Table 8

| Web | % Charge Additive | Solvent Composition | Annealed | Q |
|---|---|---|---|---|
| Control 9 | None | None | No | 0.60 |
| Control 10 | None | None | Yes | 0.49 |
| 43 | 0.2 % Chimassorb 944 | Toluene | No | 1.45 |
| 44 | 0.4 % Chimassorb 944 | Toluene | No | 1.67 |
| 45 | 0.4 % Chimassorb 944 | Toluene | Yes | 1.72 |
| | | | | |
| 46 | 1 % Chimassorb 944 | Toluene | No | 1.68 |
| 47 | 1 % Chimassorb 944 | Toluene | Yes | 1.67 |
| 48 | 2 % Chimassorb 944 | Toluene | Yes | 1.68 |
| 49 | 1 % Additive A | 60 Toluene/ 40 TFE | No | 0.88 |
| 50 | 1 % Additive D | Toluene | No | 1.11 |

Controls 11-13

The webs of Controls 11-13 consisted of hydrocharged Type B polypropylene blown microfiber webs.

Examples 51-57

Type B polypropylene blown microfiber webs were treated according to the solvent spray method with a composition that included solvent and charge additive. The webs were then dried, hydrocharged, and dried again.

The webs of Example 55 and Control 12 were annealed at 150°C for 5 minutes prior to hydrocharging. The webs of Example 57 and Control 13 were annealed at 125 °C for 5 minutes prior to hydrocharging.

The Quality Factor (Q) for each web was determined at 42.5 L/min and is reported in Table 9.

Table 9

| Web | Charge Additive (% by weight) | Solvent Composition | Annealed | Q |
|---|---|---|---|---|
| Control 11 | None | None | No | 0.35 |
| Control 12 | None | None | Yes | 0.46 |
| Control 13 | None | None | Yes | 0.73 |
| 51 | 0.2% Chimassorb 944 | Toluene | No | 0.82 |
| 52 | 0.4% Chimassorb 944 | Toluene | No | 0.76 |
| 53 | 1.0% Chimassorb 944 | Toluene | No | 0.57 |
| 54 | 1.0% Additive A | 60% Toluene /40% TFE | No | 0.65 |
| 55 | 1% Additive A | 60% Toluene/40% TFE | Yes | 0.99 |
| 56 | 1% Additive D | Toluene | No | 0.78 |
| 57 | 1 % Additive D | Toluene | Yes | 1.01 |
| TFE = 2,2,2-trifluoroethanol | | | | |

Other embodiments are within the claims.

**Claims**

1. A method of making an electret comprising:

    contacting a porous substrate comprising polymer with a composition comprising solvent capable of swelling said polymer;
    evaporating said solvent from said substrate; and
    contacting said substrate with water in a manner sufficient to impart an electret charge to said substrate.

2. The method of claim 1, wherein said composition further comprises charge additive.

3. The method of claim 2, wherein said charge additive is selected from the group consisting of fluorinated oxazolidinones, fluorinated piperazines, perfluorinated alkanes, and combinations thereof.

4. The method of claim 2, wherein said charge additive comprises poly[[6-(1,1,3,3-tetramethylbutyl)amino]-s-triazine-2,4-diyl][[(2,2,6,6-tetramethyl-4-piperidyl)imino] hexamethylene [(2,2,6,6-tetramethyl-4-piperidyl)imino]].

5. The method of any of claims 1 to 4, wherein said composition further comprises a second solvent.

6. The method of any of claims 1 to 4, wherein said solvent is selected from the group consisting of alcohols, alkyl halides, amines, amides, aromatics, esters, ethers, alkanes, alkenes, alkynes, ketones, organosilicones, alkyl pyrrolidones, paraffins, and combinations thereof.

7.  The method of any of claims 1 to 4, wherein said solvent is selected from the group consisting of toluene, heptane, hexane, hexyl alcohol, xylene, trifluoroethanol, 2-butanone, and combinations thereof.

8.  The method of any of the preceding claims, wherein said electret exhibits a Quality Factor of at least 1/mm $H_2O$.

9.  The method of any of the preceding claims, wherein said substrate comprises a nonwoven fibrous web.

10. The method of claim 9, wherein said nonwoven fibrous web comprises fibers selected from the group consisting of polycarbonate, polyolefin, polyester, halogenated polyvinyl, polystyrene, and combinations thereof.

11. The method of claim 9, wherein said nonwoven fibrous web comprises fibers selected from the group consisting of polyethylene, polypropylene, poly-(4-methyl-1-pentene), and combinations thereof.

12. The method of claim 9, wherein said nonwoven fibrous web comprises meltblown microfibers.

13. The method of claim 12, wherein said melt-blown microfibers have an effective fiber diameter of 1 $\mu$m to 50 $\mu$m.

14. The method of any of the precceding claims, wherein said contacting with water comprises impinging jets of water or a stream of water droplets on said substrate at a pressure and for a period sufficient to impart an electret charge to said substrate, said method further comprising drying said substrate.

15. The method of any of the preceding claims, wherein contacting said substrate with said composition occurs under pressure greater than atmospheric pressure.

16. The method of any of claims 1 to 14, wherein contacting said substrate with said composition comprises spraying or soaking.


**Patentansprüche**

1.  Verfahren zum Herstellen eines Elektrets, umfassend:

    Inkontaktbringen eines porösen Substrates, das Polymer umfasst, mit einer Zusammensetzung, die Lösungsmittel umfasst, das fähig ist, das Polymer zu quellen;
    Abdampfen des Lösungsmittels von dem Substrat; und
    Inkontaktbringen des Substrates mit Wasser in einer Weise, die ausreichend ist, um dem Substrat eine Elektretladung zu verleihen.

2.  Verfahren nach Anspruch 1, wobei die Zusammensetzung ferner Ladungsadditiv umfasst.

3.  Verfahren nach Anspruch 2, wobei das Ladungsadditiv aus der Gruppe ausgewählt ist, die aus fluorierten Oxazolidinonen, fluorierten Piperazinen, perfluorierten Alkanen und Kombinationen daraus besteht.

4.  Verfahren nach Anspruch 2, wobei das Ladungsadditiv Poly[[6-(1,1,3,3-tetramethylbutyl)amino]-s-triazin-2,4-diyl] [[ (2,2,6,6-tetramethyl-4-piperidyl)imino]hexamethylen[(2,2,6,6-tetramethyl-4-piperidyl)imino]] umfasst.

5.  Verfahren nach einem der Ansprüche 1 bis 4, wobei die Zusammensetzung ferner ein zweites Lösungsmittel umfasst.

6.  Verfahren nach einem der Ansprüche 1 bis 4, wobei das Lösungsmittel aus der Gruppe ausgewählt ist, die aus Alkoholen, Alkylhalogeniden, Aminen, Amiden, Aromaten, Estern, Ethern, Alkanen, Alkenen, Alkinen, Ketonen, Organosiliconen, Alkylpyrrolidonen, Paraffinen und Kombinationen daraus besteht.

7.  Verfahren nach einem der Ansprüche 1 bis 4, wobei das Lösungsmittel aus der Gruppe ausgewählt ist, die aus Toluol, Heptan, Hexan, Hexylalkohol, Xylol, Trifluorethanol, 2-Butanon und Kombinationen daraus besteht.

8.  Verfahren nach einem der vorhergehenden Ansprüche, wobei das Elektret einen Gütefaktor von mindestens 1/mm $H_2O$ umfasst.

**9.** Verfahren nach einem der vorhergehenden Ansprüche, wobei das Substrat eine Faservliesbahn umfasst.

**10.** Verfahren nach Anspruch 9, wobei die Faservliesbahn Fasern umfasst, die aus der Gruppe ausgewählt sind, die aus Polycarbonat, Polyolefin, Polyester, halogeniertem Polyvinyl, Polystyrol und Kombinationen daraus besteht.

**11.** Verfahren nach Anspruch 9, wobei die Faservliesbahn Fasern umfasst, die aus der Gruppe ausgewählt sind, die aus Polyethylen, Polypropylen, Poly(4-methyl-1-penten) und Kombinationen daraus besteht.

**12.** Verfahren nach Anspruch 9, wobei die Faservliesbahn im Schmelzblasverfahren hergestellte Mikrofasern umfasst.

**13.** Verfahren nach Anspruch 12, wobei die im Schmelzblasverfahren hergestellten Mikrofasern einen effektiven Faserdurchmesser von 1 $\mu$m bis 50 $\mu$m umfassen.

**14.** Verfahren nach einem der vorhergehenden Ansprüche, wobei das Inkontaktbringen mit Wasser das Beaufschlagen des Substrates mit Wasserstrahlen oder einem Strom von Wassertröpfchen bei einem Druck und während eines Zeitraumes umfasst, die ausreichend sind, um dem. Substrat eine Elektretladung zu verleihen, wobei das Verfahren ferner das Trocknen des Substrats umfasst.

**15.** Verfahren nach einem der vorhergehenden Ansprüche, wobei das Inkontaktbringen des Substrats mit der Zusammensetzung unter einem Druck erfolgt, der größer als Atmosphärendruck ist.

**16.** Verfahren nach einem der Ansprüche 1 bis 14, wobei das Inkontaktbringen des Substrats mit der Zusammensetzung das Besprühen oder Einweichen umfasst.

**Revendications**

**1.** Procédé de fabrication d'un électret, comprenant :

la mise en contact d'un substrat poreux comprenant un polymère avec une composition comprenant un solvant capable de faire gonfler ledit polymère ;
l'évaporation dudit solvant à partir dudit substrat ; et
la mise en contact dudit substrat avec de l'eau d'une façon suffisante pour faire acquérir une charge électret audit substrat.

**2.** Procédé selon la revendication 1, dans lequel ladite composition comprend en outre un additif de charge.

**3.** Procédé selon la revendication 2, dans lequel ledit additif de charge est sélectionné dans le groupe constitué des oxazolidinones fluorées, des pipérazines fluorées, des alkenes perfluorés, et de combinaisons de ceux-ci.

**4.** Procédé selon la revendication 2, dans lequel ledit additif de charge comprend le poly[[6-(1,1,3,3-tétraméthylbutyl)amino]s-triazine-2,4-diyl][[(2,2,6,6-tétraméthyl-4-pipéridyl)imino]hexaméthylène[(2,2,6,6-tétraméthyl-4-pipéridyl)imino]].

**5.** Procédé selon l'une quelconque des revendications 1 à 4, dans lequel ladite composition comprend en outre un deuxième solvant.

**6.** Procédé selon l'une quelconque des revendications 1 à 4, dans lequel ledit solvant est sélectionné dans le groupe constitué des alcools, des halogénures d'alkyle, des amines, des amides, des composés aromatiques, des esters, des éthers, des alcanes, des alcènes, des alcynes, des cétones, des organosilicones, des alkylpyrrolidones, des paraffines, et de combinaisons de ceux-ci.

**7.** Procédé selon l'une quelconque des revendications 1 à 4, dans lequel ledit solvant est sélectionné dans le groupe constitué du toluène, de l'heptane, de l'hexane, de l'alcool hexylique, du xylène, du trifluoroéthanol, du 2-butanone, et de combinaisons de ceux-ci.

**8.** Procédé selon l'une quelconque des revendications précédentes, dans lequel ledit électret présente un Facteur de qualité d'au moins 1/mm $H_2O$.

**9.** Procédé selon l'une quelconque des revendications précédentes, dans lequel ledit substrat comprend une bande fibreuse non tissée.

**10.** Procédé selon la revendication 9, dans lequel ladite bande fibreuse non tissée comprend des fibres sélectionnées dans le groupe constitué des polycarbonates, des polyoléfines, des polyesters, des polyvinyles halogénés, des polystyrènes, et de combinaisons de ceux-ci.

**11.** Procédé selon la revendication 9, dans lequel ladite bande fibreuse non tissée comprend des fibres sélectionnées dans le groupe constitué des polyéthylènes, des polypropylènes, du poly-(4-méthyl-1-pentène), et de combinaisons de ceux-ci.

**12.** Procédé selon la revendication 9, dans lequel ladite bande fibreuse non tissée comprend des microfibres extrudées soufflées.

**13.** Procédé selon la revendication 12, dans lequel lesdites microfibres extrudées soufflées ont un diamètre effectif de fibre de 1 $\mu$m à 50 $\mu$m.

**14.** Procédé selon l'une quelconque des revendications précédentes, dans lequel ladite mise en contact avec de l'eau comprend la projection de jets d'eau ou d'un flux de gouttelettes d'eau contre ledit substrat, à une pression suffisante et pendant suffisamment de temps pour faire acquérir une charge électret audit substrat, ledit procédé comprenant en outre le séchage dudit substrat.

**15.** Procédé selon l'une quelconque des revendications précédentes, dans lequel la mise en contact dudit substrat avec ladite composition a lieu à une pression supérieure à la pression atmosphérique.

**16.** Procédé selon l'une quelconque des revendications 1 à 14, dans lequel la mise en contact dudit substrat avec ladite composition comprend la pulvérisation ou le trempage.

Fig. 1

Fig. 2